# EUROPÄISCHE PATENTSCHRIFT

(11) **EP 2 844 884 B1**
(45) Veröffentlichungstag und Bekanntmachung des Hinweises auf die Patenterteilung: **12.07.2017**
(21) Anmeldenummer: 13721584.4
(22) Anmeldetag: 01.05.2013
(51) Int. Cl.: F16B 13/00, F16B 25/00, F16B 43/02

(54) **SCHRAUBE FÜR LEICHTBAUSTOFFE**
SCREW FOR LIGHTWEIGHT CONSTRUCTION MATERIALS
VIS POUR MATÉRIAUX DE CONSTRUCTION LÉGERS

(30) Priorität: 02.05.2012 CH 6062012
(43) Veröffentlichungstag der Anmeldung: 11.03.2015
(73) Patentinhaber: Cava Halbfabrikate AG, 7310 Illanz (CH)
(72) Erfinder: CAVEGN, Ronny, CH-7310 lllanz (CH)
(74) Vertreter: Riederer Hasler & Partner Patentanwälte AG
(86) Internationale Anmeldenummer: PCT/CH2013/000075
(87) Internationale Veröffentlichungsnummer: WO 2013/163772

(56) Entgegenhaltungen:
- WO-A1-2008/123893
- DE-A1-102010 027 912
- DE-U1- 20 111 194
- DE-U1- 29 812 947
- US-A- 3 212 387

## Beschreibung

### Gebiet der Erfindung

Die Erfindung betrifft eine Schraube gemäss Oberbegriff des Anspruchs 1 und ein Set gemäss Anspruch 12.

### Stand der Technik

Aus der EP 1 305 529 B1 ist ein Dübel für Leichtbaustoffe bekannt. Der Dübel umfasst eine Dübelhülse und ein an der Aussenseite der Dübelhülse angeordnetes selbstschneidendes Gewinde. An seinem ersten Ende besitzt der Dübel eine Schneidspitze zum Eindrehen des Dübels in einen Leichtbaustoff, ohne dass ein Vorbohren in dem Leichtbaustoff notwendig wäre. In dem Dübel ist entlang seiner Längsachse eine Innenöffnung vorgesehen. Am ersten Ende des Dübels ist die Innenöffnung geschlossen. Am zweiten, der Spitze abgewandten Ende des Dübels ist die Innenöffnung offen gehalten und besitzt einen Sechskantquerschnitt. Der Sechskantquerschnitt dient der Aufnahme eines Schraubenbits, durch welchen ein Drehmoment auf den Dübel übertragbar ist. Die Innenöffnung ist für das Einschrauben einer Schraube vorgesehen, welche sich in Axialrichtung verlaufende Rippen der Innenöffnung einschneidet. Das Herstellen einer Halterung an dem Leichtbaustoff ist jedoch aufwendig, da der Dübel und die Schraube hintereinander eingeschraubt werden müssen.

In der DE 20 2009 011 050 U1 ist eine Befestigungseinrichtung zum Eindrehen in einen Leichtbaustoff, wie Dämmmaterial bekannt. Als erstes Befestigungsmittel dient ein Schaft mit einem Aussengewinde, welcher sich an einem ersten Ende konisch verjüngt. An einem zweiten, dem ersten Ende abgewandten Ende geht ein ein Aussengewinde aufweisender Stift als ein zweites Befestigungsmittel aus. Der Durchmesser des Stifts ist kleiner als der des Schafts. Der Stift ist undrehbar mit dem Schaft verbunden oder integral mit diesem ausgebildet, wobei der Schaft und der Stift eine gemeinsame Längsachse besitzen. Der Stift weist an seinem dem Schaft abgewandten Ende einen Werkzeugansatz zur Übertragung eines Drehmoments auf. Im Gegensatz zu dem Dübel gemäss der EP 1305 529 B1 lassen sich der Schaft und der Stift zusammen in einem Arbeitsgang eindrehen. Zur Halterung eines Gegenstandes an dem Leichtbaustoff mittels der Befestigungseinrichtung ist jedoch ein zusätzliches Bauteil, beispielsweise eine Überwurfmutter nötig, welche angezogen werden muss.

In der DE 10 2010 027 912 A1 ist ein Befestigungselement mit einem Hülsenelement und einer gewindeartig verlaufenden Flachrippe an seine Aussenseite beschrieben. Am Beginn des Hülsenelements weist die Flachrippe noch nicht ihre vollständige Radialerstreckung auf. An einer Seite des Hülsenelements ist ein Kopf in Gestalt einer Platte vorgesehen. An der der Platte abgewandten Seite ist das Hülsenelement von einem Loch durchdrungen. Das Hülsenelement wird in ein Isoliermaterial eingeschraubt, welches mittels des Hülsenelements an einer Unterkonstruktion gehalten ist. Durch den hohlen Innenraum des Hülsenelements wird durch das Loch eine Schraube hindurchgesteckt und in die Unterkonstruktion eingeschraubt. Das Befestigungselement dient dazu, ein Isoliermaterial an einer Unterkonstruktion zu halten.

In der DE 298 12 947 U1 ist ein Einschraubdübel mit einem eine Zuspitzung und ein Gewinde aufweisenden Schaft offenbart, welcher für weiche Stoffe vorgesehen ist. Der Schaft weist eine Innenhöhlung für das Einschrauben eines Befestigungselements auf. Das Gewinde erreicht von der Zuspitzung ausgehend nach einem Gewindegang die volle Flankenhöhe. Die Breite des Gewindegrates nimmt vom vorderen zum hinteren Ende zu. Der Einschraubdübel muss genau an der Stelle in das weiche Material eingeschraubt werden, an der das Befestigungselement positioniert werden soll.

Aus der DE 201 11 194 ist eine Schraube zum Eindrehen in einen Werkstoff niederer Festigkeit bekannt. Gegenüber dem Schraubenschaft ist das Gewinde hoch um eine verbesserte Haltekraft in dem Werkstoff niederer Festigkeit zu erreichen.

### Aufgabe der Erfindung

Aufgabe der vorliegenden Erfindung ist es daher eine Schraube vorzuschlagen, welche die Halterung von Gegenständen an einem Leichtbaustoff verbessert, ohne dass zusätzliche Bauteile oder mehrere Arbeitsschritte nötig wären.

### Beschreibung

Erfindungsgemäss wird die Aufgabe bei einer Schraube gemäss Oberbegriff des Anspruchs 1 dadurch gelöst, dass der Schraubenkopf als eine integrale Beilagscheibe ausgebildet ist, welche das Einsinken des Schraubenkopfs in den Leichtbaustoff verhindert und dass das Aussengewinde eine Flankenhöhe besitzt, welche Flankenhöhe an jeder Stelle des Aussengewindes grösser oder gleich dem halben Radius der Beilagscheibe ist. Diese Merkmale bewirken, dass die erfindungsgemässe Schraube fest in einem Leichtbaustoff hält und eine hohe Ausreisssicherheit in dem relativ weichen Leichtbaustoff besitzt. Der grosse Beilagscheibendurchmesser von ca. 90mm verdichtet den Leichtbaustoff beim Festziehen unterhalb der Beilagscheibe. Der Anpressdruck wird dabei über die ganze Oberfläche der Beilagscheibe verteilt, wodurch ein Einschneiden in den Leichtbaustoff verhindert wird. Die Bemassung der Beilagscheibe und der Flankenhöhe hat den Effekt, dass die Beilagscheibe und darunterliegende Gewindeflanken ausreichend Platz für eine Befestigungsschraube haben, welche in die Beilagscheibe und darunterliegende Flanken einschraubbar ist.

In einer besonders bevorzugten Ausführung besitzt das Aussengewinde an jeder Stelle eine ausreichende Flankenhöhe, damit eine Schraube mit Orientierung im Wesentlichen parallel zum Gewindeschaft in das Aussengewinde eindrehbar ist und in der Schraube gehalten werden kann. Die erfindungsgemässe Schraube kann direkt zur Halterung von Beschlägen verwendet werden, welche an einem Leichtbaustoff zu halten sind. Zu solchen Beschlägen zählen Kloben, Rohrschellen usw. Auf eine Halteplatte, welche von einer Dämmstoffschraube gehalten ist und in welche die Beschläge einschraubbar sind, kann daher verzichtet werden. Die Halterung von Beschlägen ist denkbar einfach, da in die erfindungsgemässe Schraube, nachdem diese in den Leichtbaustoff eingeschraubt wurde, nur noch ein Loch vorgebohrt werden muss. Je mehr Gewindeflanken das Bohrloch durchdringt, umso fester hält der Beschlag. Der Beschlag ist dann nur noch in die Beilagscheibe und die übereinander liegenden Gewindeflanken einzuschrauben.

Zweckmässigerweise weist die Beilagscheibe einen Radius von wenigstens 35 mm und bevorzugt von wenigstens 45 mm auf. Diese Bemassung des Radius bewirkt, dass die Beilagscheibe dem Leichtbaustoff einen ausreichenden Widerstand entgegensetzt, um sich nicht in den Leichtbaustoff einzugraben. Auch bei einer Kippbelastung der Schraube verhindert die grosse Beilagscheibe das Eindringen in den Leichtbaustoff.

Als vorteilhaft erweist es sich, wenn die die Beilagscheibe an ihrer dem Aussengewinde abgewandten Seite eine Waffelstruktur aufweist. Eine Halteschraube oder ein Bohrer zum Vorbohren eines Loches lassen sich durch die Waffelstruktur exakt an der Oberfläche der Beilagscheibe positionieren, da die Spitze in der gewünschten Position in einer Vertiefung der Waffelstruktur einrastet.

Damit die Schraube auch an ihrer Spitze in dem Leichtbaustoff gehalten ist, weist die Flankenhöhe zweckmässigerweise am ersten Ende des Gewindeschafts eine Flankenhöhe von wenigstens 15 mm, bevorzugt von wenigstens 20 mm und besonders bevorzugt von wenigstens 25 mm auf.

Mit Vorteil nimmt die Flankenhöhe vom ersten Ende zum zweiten Ende des Gewindeschafts kontinuierlich zu. Dadurch kann sich die Schraube kontinuierlich aufweitend in den Leichtbaustoff einschneiden, ohne dass eine zu grosse Flankenhöhe an der Schraubenspitze den Leichtbaustoff aufreissen würde und dadurch den Schraubenhalt reduzieren würde. Im Bereich des zweiten Schraubenendes ist die Flankenhöhe nahezu gleich gross, wie der Radius der Beilagscheibe, um eine möglichst grosse Auszugssicherheit sicher zu stellen.

Mit Vorteil beträgt die Flankenhöhe am zweiten Ende des Gewindeschafts wenigstens 80 % des Radius der Beilagscheibe, um eine möglichst grosse Auszugssicherheit der Schraube, welche in einen Leichtbaustoff eingeschraubt ist, zu gewährleisten. Vorzugsweise übersteigt die Flankenhöhe den Radius der Beilagscheibe nicht, um den Leichtbaustoff nicht ausserhalb der Beilagscheibe zu schwächen.

Vorteilhaft besitzt der Gewindeschaft die Gestalt eines Konus. D.h. der Durchmesser des Gewindeschafts nimmt in Richtung des Schraubenkopfs kontinuierlich zu. Da der Durchmesser des Konus kontinuierlich zunimmt, wird der Leichtbaustoff beim Eindrehen der Schraube ebenfalls kontinuierlich aufgeweitet. Dies hat den Vorteil, dass der Leichtbaustoff durch das Eindrehen der Schraube nicht zerstört, sondern rund um den Gewindeschaft lediglich komprimiert wird. In den Bereich des komprimierten Leichtbaustoffs schneidet sich das Gewinde. Da der Leichtbaustoff durch die Schraube nicht zerstört wird, hält die Schraube sehr gut in selbigem. Das Einschneiden des Gewindes in das komprimierte Leichtbaustoffmaterial verbessert den Halt der Schraube zusätzlich. Wegen des konischen Gewindeschafts ist ein Vorbohren in dem Leichtbaustoff nicht notwendig.

Bevorzugt ist der Konus als ein gerader Kreiskegel ausgebildet, dessen Spitze das erste Ende des Gewindeschafts bildet und dessen Basiskreis das zweite Ende des Gewindeschafts bildet. Denkbar wären auch Kegelerzeugende, welche Kurven und keine Geraden sind. Für eine gleichmässige Komprimierung des Leichtbaustoffs ist jedoch ein gerader Kreiskegel zu bevorzugen.

Als vorteilhaft erweist es sich, wenn der Konus einen Öffnungswinkel aufweist, welcher zwischen 10 und 2 Grad, bevorzugt zwischen 8 und 3 Grad und besonders bevorzugt zwischen 6 und 4 Grad liegt. Ein Kegel mit einem Öffnungswinkel in dem beanspruchten Bereich kann als schlanker Kegel bezeichnet werden, da der Durchmesser des Kegels mit zunehmender Höhe nur langsam zunimmt. Diese Dimensionierung führt dazu, dass der Leichtbaustoff beim Eindrehen der Schraube nur geringfügig komprimiert wird und eine Zerstörung des Leichtbaustoffs sicher vermieden ist. Zweckmässigerweise besitzt das Aussengewinde eine Flankenhöhe, welche vom ersten Ende des Gewindeschafts zum zweiten Ende des Gewindeschafts zunimmt. Als Flankenhöhe soll im Rahmen dieser Anmeldung jeweils der kürzeste Abstand zwischen einer Flankenspitze und der Gewindeflanke bzw. dem Gewindegrund verstanden werden Die kontinuierliche Zunahme der Flankenhöhe erlaubt es, dass sich die Spitze der Schraube ohne Vorbohren in den Leichtbaustoff von selber einschneidet. Selbst, wenn auf dem Leichtbaustoff eine Verputzschicht aufgetragen ist, so schneidet sich die Schraube in den Verputz, ohne dass ein Vorbohren notwendig ist.

In einer weiteren bevorzugten Ausführungsform nimmt die Flankenhöhe vom ersten Ende der Schraube über ein Drittel der Länge der Schraube zu und nimmt in Richtung des zweiten Endes der Schraube wieder ab. D.h. der Aussendurchmesser des Aussengewindes nimmt von dem ersten Ende im ersten Drittel zu und bleibt über die restliche Schraubenlänge bevorzugt konstant. Durch diese Gestaltung der Flankenhöhe lässt sich die Schraube an Leichtbaustoffe mit verschiedenen Härten anpassen.

Der Flankenwinkel des Gewindes beträgt zwischen 35 und 15 Grad, bevorzugt zwischen 30 und 20 Grad und besonders bevorzugt zwischen 26 und 24 Grad. Diese Bemassung des Gewindes bewirkt, dass das Gewinde ausreichend stabil ausgeführt ist, um die Schraube in dem Leichtbaustoff zu verankern und gleichzeitig eine Zerstörung des Leichtbaustoffs und eine daraus folgende Schwächung des Schraubenhalts verhindert ist. Diese Bemassung führt dazu, dass sich das Gewinde in den Leichtbaustoff schneidet, und das Material des Leichtbaustoffs im Bereich des Gewindes komprimiert aber nicht zerstört wird. Dadurch hält das Gewinde resp. die Schraube fest in dem Leichtbaustoff. Bevorzugt besitzt das Gewinde im Querschnitt die Form eines gleichschenkeligen Dreiecks. Denkbar wäre es jedoch auch, dass die Gewindeflanke im Querschnitt beispielsweise ein rechtwinkeliges Dreieck darstellt. Die Gewindeflanke, welche an den rechten Winkel anschliesst, kann dann in Richtung der ersten oder zweiten Seite des Gewindeschafts orientiert sein. Dadurch ist es möglich, das Gewinde an verschiedene Leichtbaustoffe anzupassen.

In einem bevorzugten Ausführungsbeispiel liegt die Steigung des Gewindes zwischen 40 und 10 mm, bevorzugt zwischen 35 und 15 mm und besonders bevorzugt zwischen 30 und 20 mm. Dadurch ergibt sich ein Zwischenraum zwischen benachbarten Gewindegängen, sodass in den Zwischenräumen ausreichend Leichtbaustoffmaterial aufnehmbar ist, um die Schraube zuverlässig zu halten. Wäre die Gewindesteigung zu gering oder zu gross, so würde die Schraube bei Belastungen zum Ausreissen neigen.

Zweckmässigerweise beträgt der Aussendurchmesser des Aussengewindes an jeder Stelle des Aussengewindes im Wesentlichen das Doppelte des Aussendurchmessers des Gewindeschafts. Dieser gewählte Durchmesser des Aussengewindes führt zu einer grossen Gewindehöhe bzw. Flankenhöhe, welche notwendig ist, dass die Gewindeflanken tief in den Leichtbaustoff eindringen. Ein Ausreissen der Schraube, also ein Brechen von Leichtbaumaterial im Gewindebereich, ist daher zusätzlich durch die Flankenhöhe verhindert.

In einem weiteren bevorzugten Ausführungsbeispiel ist der Schraubenkopf als eine Beilagscheibe ausgebildet ist, welche das Einsinken des Schraubenkopfs in den Leichbaustoff verhindert. Da es sich bei dem Leichtbaustoff um ein weiches Material handelt, würde sich ein zu kleiner Schraubenkopf in den Leichtbaustoff beim Anziehen der Schraube zu tief in den Leichtbaustoff graben, bevor das nötige Anzugsmoment erreicht wäre. Dementsprechend ist der Durchmesser der Beilagscheibe bemasst.

In einem weiteren bevorzugten Ausführungsbeispiel ist der Schraubenkopf als eine Kugelschicht ausgebildet ist, wobei der begrenzende Kreis mit dem kleineren Radius am Übergang zu dem zweiten Ende des Gewindeschafts angeordnet ist. Dieses Gestaltungsmerkmal erlaubt, dass die Schraube bezüglich ihrer Längsachse verschwenkbar zu der Beilagscheibe ist. Dies ist von Vorteil, wenn die Schraube in einem schrägen und nicht rechten Winkel zu der Oberfläche des Leichtbaustoffs orientiert sein soll. So können Unebenheiten im Leichtbaustoff ausgeglichen werden oder die Schraube kann beispielsweise nahe an Kanten des Leichtbaustoffs gesetzt werden und ist schräg zu der Kante orientiert. Wenn die Position des Schraubenkopfs vorgegeben ist, so kann diese Position auch beibehalten werden, wenn sich in dem Leichtbaustoff Hindernisse für die Schraube befinden. Durch Schrägstellung der Schraube, kann die Schraube an dem Hindernis vorbeigeschraubt werden. Durch schräges Eindrehen der Schaube kann auch die Haltekraft der Schraube in dem Leichbaustoff erhöht werden. Wird die in eine vertikale Wand eingeschraubte Schraube beispielsweise durch eine Last belastet, welche nach unten wirkt, so erhöht ein Eindrehen schräg nach unten die Haltekraft. Die Beilagscheibe liegt dann trotz der Schrägstellung der Schraube vollflächig an der Oberfläche der Wand auf.

Zweckmässigerweise umfasst die Schraube eine Beilagscheibe mit einer Durchgangsöffnung, wobei der Mantel der Durchgangsöffnung derart ausgestaltet ist, dass der Schraubenkopf kugelgelenkig in der Beilagscheibe aufgenommen ist. Der Schraubenkopf wirkt bildet mit der Durchgangsöffnung der Beilagscheibe ein Kugelgelenk. Der Gewindeschaft kann aber muss daher nicht normal zu der Beilagscheibe orientiert sein, sondern kann auch quer bzw. schräg zu der Beilagscheibe in den Leichtbaustoff eingeschraubt werden. Ist eine Halterung beispielsweise möglichst nah an einer Kante des Leichtbaustoffs herzustellen, so ist es von Vorteil, wenn die Schraube schräg zu der Kante, sodass sich der Abstand zu der Kante vergrössert, einschraubbar ist.

Die Beilagscheibe besitzt vorteilhaft einen Durchmesser, welcher mindestens dem 1,5-fachen, bevorzugt mindestens dem 2-fachen und besonders bevorzugt mindestens dem 2,5-fachen des Durchmessers des grössten Aussendurchmessers des Aussengewindes entspricht. Dieser relativ grosse Durchmesser der Beilagscheibe relativ zu dem Gewindedurchmesser erlaubt, dass der Schraubenkopf auch in relativ weichen Leichtbaustoffen am Einsinken gehindert ist und ein ausreichendes Anzugsmoment der Schraube in dem Leichtbaustoff herstellbar ist. Es versteht sich, dass der Aussendurchmesser der Beilagscheibe von der Härte des Leichtbaustoffs abhängt. So wird der Aussendurchmesser für die Anwendung bei einer Styroporplatte grösser sein müssen, als bei einer Hartschaumplatte.

Als vorteilhaft erweist es sich, wenn der Werkzeugansatz durch eine Mehrzahl von an der Stirnseite des Schraubenkopfs konzentrisch angeordneten Vertiefungen gebildet ist. Ein Drehmoment kann durch die Mehrzahl von Vertiefungen auf die Schraube übertragen werden, ohne dass die Gefahr des Durchdrehens eines Werkzeugs in dem Schraubenkopf gegeben wäre. Die Anzahl der Vertiefungen ist beliebig, es haben sich jedoch sechs Vertiefungen als ausreichend erwiesen, um ein notwendiges Drehmoment zum Eindrehen in einen Leichtbaustoff übertragen zu können.

In einem weiteren bevorzugten Ausführungsbeispiel ist an der Schraube eine Innenöffnung vorgesehen ist, welche von der Stirnseite des Schraubenkopfs zugänglich ist. Die Innenöffnung ermöglicht es, dass in die Schraube eine zweite Schraube eingeschraubt werden kann. In diesem Fall wirkt die erfindungsgemässe Schraube als ein Dübel, welcher handelsübliche Schrauben an dem Leichtbaustoff halten. Die Beilagscheibe verhindert, dass die Schraube durch Eindrehen der zweiten Schraube ungewollt verdreht wird.

Um eine zuverlässige Halterung der zweiten Schraube sicher zu stellen, weist die Innenöffnung in Axialrichtung der Schraube verlaufende nach innen vorspringende Stege auf. Die zweite Schraube kann sich beim Eindrehen in diese Stege tief einschneiden und ist fest in der Innenöffnung gehalten.

Ein weiterer Aspekt der Erfindung betrifft ein Set aus einer Schraube nach den vorgehenden Ansprüchen, einer Konterplatte und einem Werkzeug, welches einen Support zur Halterung an einem elektrischen oder manuellen Schraubendreher und eine Mehrzahl von konzentrisch an dem Support angeordneten Stiften aufweist, wobei die Stifte zur Drehmomentübertragung in die Vertiefungen des Schraubenkopfs eingreifen können. Dieses Set hat den Vorteil, dass die Schraube auch in sehr weichen Leichtbaustoffen, beispielsweise aus Styropor, durch die Konterplatte halt findet. Die Schraube wird in die Einschrauböffnung der in denn Leichbaustoff eingeschobenen Konterplatte eingedreht. Die Konterplatte ist daher fest mit der Schraube verbunden und bildet einen grossen Auszugswiderstand. Die Schraube verliert in dem Leichtbaustoff erst dann halt, wenn diese mitsamt der Konterplatte aus dem Leichtbaustoff herausgerissen wird. Zweckmässigerweise ist die Einschrauböffnung derart bemasst, dass sich die Schraube leicht einschrauben lässt, der Durchmesser der Einschrauböffnung also grösser ist, als der Gewindeschaftdurchmesser. Andererseits darf die Einschrauböffnung nicht zu gross sein, damit die Gewindeflanken gut in der Konterplatte halten.

Das Drehmoment ist zuverlässig von dem Werkzeug auf die Schraube übertragbar. Darüber hinaus wird durch das Set ein Alleinstellungsmerkmal gebildet, da die erfindungsgemässe Schraube nicht mit handelsüblichen Werkzeugen, beispielsweise Schraubenbits, verdrehbar ist.

Um das Einschieben der Konterplatte in den Leichtbaustoff zu erleichtern, besitzt die Konterplatte an wenigstens einer Seite eine Schneide. Die Konterplatte wird mit der Schneide voran in den Leichtbaustoff eingedrückt, bis die Konterplatte vollständig in dem Leichtbaustoff aufgenommen ist.

Mit Vorteil ist in der Konterplatte wenigstens eine Durchführung mit Innengewinde vorgesehen. Dadurch kann eine Schraube nicht nur in das Aussengewinde der erfindungsgemässen Dämmstoffschraube eingedreht werden, sondern kann auch in die Konterplatte eingeschraubt werden, welche in diesem Fall auch als eine Halteplatte dient.

Weitere Vorteile und Merkmale ergeben sich aus der nachfolgenden Beschreibung mehrerer Ausführungsbeispiele der Erfindung unter Bezugnahme auf die schematischen Darstellungen. Es zeigen in nicht massstabsgetreuer Darstellung:
- Figur 1:: eine Seitenansicht einer erfindungsgemässen Schraube zum Eindrehen in Leichtbaustoffe mit einer integralen Beilagscheibe
- Figur 2:: eine perspektivische Ansicht der Schraube aus Figur 1
- Figur 3:: die Schraube aus Figur 1 in einer Draufsicht;
- Figur 4:: Eine axonometrische Ansicht einer zweiten Ausführungsform der erfindungsgemässen Schraube, bei der der Schraubenkopf drehbar in der Beilagscheibe aufgenommen ist;
- Figur 5:: die Schraube aus Figur 4 in einer Seitenansicht;
- Figur 6:: die Schraube aus Figur 4 in einer Draufsicht auf den Schraubenkopf
- Figur 7:: eine Schnittdarstellung durch den Schraubenkopf aus Figur 6;
- Figur 8:: eine Seitenansicht eines Werkzeugs zur Drehmomentübertragung,
- Figur 9:: eine axonometrische Ansicht des Werkzeugs aus Figur 8 und
- Figur 10:: eine Draufsicht auf eine Konterplatte.

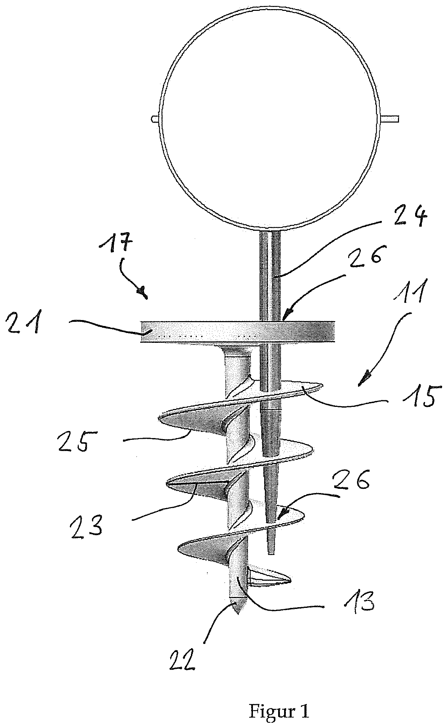

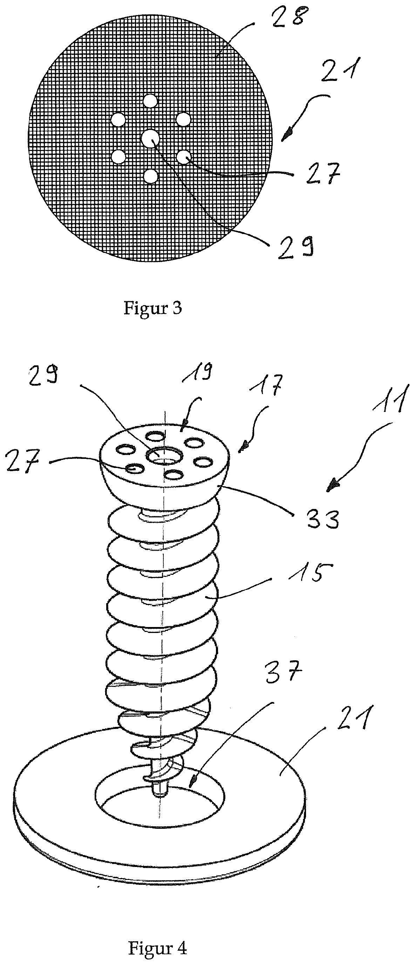

In den Figuren 1 bis 7 ist eine erfindungsgemässe Schraube zur Halterung von Gegenständen an einem Leichtbaustoff gezeigt. Die Figuren 1 und 3 zeigen eine erste Ausführungsform und die Figuren 4 bis 7 eine zweite Ausführungsform.

In der ersten Ausführungsform umfasst die Schraube neben einem Gewindeschaft 13 einem Aussengewinde 15, einem Schraubenkopf 17 und einem Werkzeugansatz 19 auch eine integrale Beilagscheibe 21. Der Gewindeschaft 13 besitzt eine Spitze 22 an seinem ersten Ende. Der Schraubenkopf 17 ist an dem zweiten Ende des Gewindeschafts 13 ausgebildet.

Die erfindungsgemässe Schraube 11 weist eine Mehrzahl von Merkmalen auf, welche eine zuverlässige Halterung in einem Leichtbaustoff ermöglichen. Als Leichtbaustoffe werden im Rahmen dieses Dokuments insbesondere weiche druckfeste Untergründe verstanden, also Dämmmaterialien wie Styroporplatten, Hartschaumplatten, Glasfaser- oder Kunststoffplatten.

Zu diesen Merkmalen zählt, dass der Schraubenkopf 17 als eine integrale Beilagscheibe 21 ausgebildet ist, welche einen so grossen Durchmesser aufweist, dass das Einsinken des Schraubenkopfs 17 in den Leichtbaustoff verhindert wird. Ein derartig dimensionierter Schraubenkopf 17, hat auch den Vorteil, dass bei einem entsprechenden Drehmoment der Leichtbaustoff unterhalb des Schraubenkopfs 17 verdichtet und verfestigt wird. Ein Beilagscheiben-Durchmesser von wenigstens 50 mm und bevorzugt von 90 mm kann die vorstehend beschriebene Wirkung in den branchenüblichen Leichtbaustoffen erzielen. Dieser grosse Durchmesser der Beilagscheibe 21 verhindert daher das Einsinken des Schraubenkopfs 17 in den Leichtbaustoff während des Festziehens der Schraube 11 und während des Haltens des Gegenstands.

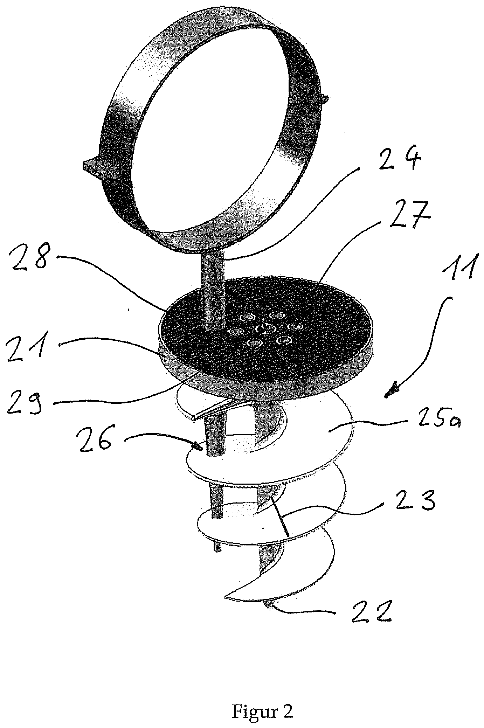

Ein weiteres Merkmal betrifft die Flankenhöhe des Aussengewindes 15 der erfindungsgemässen Schraube 11. Die Flankenhöhe 23 beträgt an dem zweiten Ende des Gewindes wenigstens 80 % des Radius der Beilagscheibe und verkleinert sich kontinuierlich bis zum ersten Ende des Gewindes auf wenigstens 50% des Radius der Beilagscheibe 21. Ein beispielhaftes Aussengewinde 15 besitzt am zweiten Ende eine Flankenhöhe 23 von 45 mm, welche sich auf 25 mm am ersten Ende kontinuierlich verkleinert. Ein Aussengewinde 15 mit einer derart grossen Flankenhöhe 23 bietet durch seine grosse Oberfläche einen zuverlässigen Halt in einem weichen Leichtbaustoff. Diese grosse Flankenhöhe 23 bietet einen weiteren Vorteil: Sie ermöglicht, dass die erfindungsgemässe Schraube 11 der direkten Halterung von Halteschrauben dient, indem ein Haltegegenstand, beispielsweise eine Rohrschelle 24 mit Schraube (Figur 1 und 2), direkt in die Beilagscheibe 21 und die Gewindeflanken 25 einschraubbar ist. Dazu ist in die Beilagscheibe 21 und die Gewindeflanken 25 ein Bohrloch 26 vorzubohren, in welche dann die selbstschneidende Schraube einschraubbar ist.

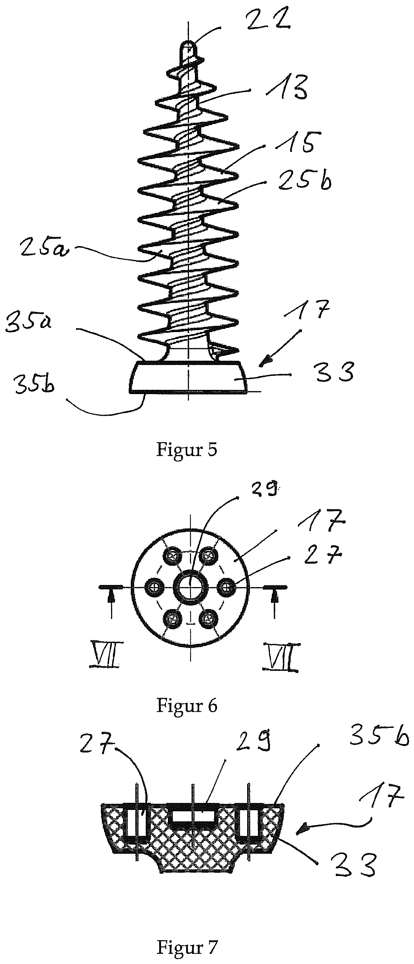

Die Beilagscheibe 21 hat an der, dem Aussengewinde 15 abgewandten Oberfläche eine Waffelstrukur 28. Dadurch ist es besonders einfach einen Bohrer zur Vorbohrung an der Beilagscheibe anzusetzen, da die Bohrerspitze an der gewählten Position in der Waffelstruktur 28 einrastet. Ein Abrutschen der Bohrerspitze an der Beilagscheiben-Oberfläche ist daher vermieden.
Ein weiteres Merkmal, welches der sicheren Halterung der Schraube 11 in einem Leichtbaustoff dient, ist, dass der Gewindeschaft 13 von seinem ersten bis zu seinem zweiten Ende als ein Konus ausgebildet ist, wie es die Figuren 1 und 5 zeigen. Vorzugsweise ist der Konus als ein gerader, also gleichmässiger Kreiskegel ausgebildet. Da sich der Durchmesser des Konus gleichmässig vom ersten Ende zum zweiten Ende des Gewindeschafts 13 erweitert, wird der Leichtbaustoff beim Einschrauben der Schraube 11 kontinuierlich aufgeweitet, ohne dass er rund um die Schraube 11 brechen würde oder durch das Einschrauben geschwächt werden würde. Der konusförmige Gewindeschaft 13 ermöglicht es auch, dass die Schraube durch eine auf dem Leichtbaustoff aufgetragene Verputzschicht dringt, ohne dass diese, wie bei Isolierschrauben des Stands der Technik vorgebohrt werden müsste. Um ein dosiertes Aufweiten des Leichtbaustoffs bzw. der Isolierschicht zu ermöglichen, ist der Kegel möglichst schlank ausgeführt, ist jedoch auch ausreichend stabil ausgeführt um den Kräften, wie Zug-, Druck oder Torsionskräften, welche auf die Schraube 11 wirken, standzuhalten. Der Öffnungswinkel des Konus beträgt daher zwischen 10 und 2 Grad, bevorzugt zwischen 8 und 3 Grad und besonders bevorzugt zwischen 6 und 4 Grad. Darüber hinaus nimmt auch die Flankenhöhe 23 des Aussengewindes vom ersten Ende zum zweiten Ende des Gewindeschafts 13 zu.
Das Aussengewinde 15 ist selbstschneidend ausgeführt. Um eine gute selbstschneidende Wirkung und einen guten Halt in dem weichen Leichtbaustoff zu erzielen, besitzt das Aussengewinde 15 eine grosse Flankenhöhe 23 relativ zum Durchmesser des Gewindeschafts 13. Der Aussendurchmesser des Gewindes beträgt daher bevorzugt zwischen dem 3 und dem 10-fachen des Innendurchmessers, bevorzugt zwischen dem 4 und dem 9-fachen und besonders bevorzugt zwischen dem 5 und dem 8-fachen des Innendurchmessers. Die selbstschneidende Wirkung wird durch einen Flankenwinkel des Aussengewindes zwischen 35 und 15 Grad, bevorzugt zwischen 30 und 20 Grad und besonders bevorzugt zwischen 26 und 24 Grad verstärkt. Das Aussengewinde hat im Querschnitt bevorzugt die Gestalt eines gleichschenkeligen Dreiecks, kann jedoch auch so gestaltet sein, dass die Flanke 25a, welche dem zweiten Ende des Gewindeschafts zugewandt ist, abgeflacht ist. D.h. diese Flanke 25a kann im Wesentlichen normal zur Schraubenachse orientiert sein.

Das Aussengewinde besitzt eine Steigung, welche zwischen 20 und 5 mm, bevorzugt zwischen 17 und 8 mm und besonders bevorzugt zwischen 9 und 15 mm liegt. Diese relativ grosse Gewindesteigung ermöglicht es, dass die Schraube mit wenigen Umdrehungen in den Leichtbaustoff eindrehbar ist. Die gewählte Steigung hat auch zur Folge, dass benachbarte Flanken 25 des Aussengewindes 15 einen Abstand besitzen, der es ermöglicht, dass in dem Freiraum zwischen benachbarten Flanken ausreichend Leichtbaustoffmaterial vorhanden ist. Dadurch wird der sichere Sitz der Schraube in dem Leichtbaustoff weiter verbessert.

Der Werkzeugansatz kann in Gestalt von einer Mehrzahl von konzentrisch angeordneten kreisrunden Vertiefungen 27 realisiert sein, welche an der Stirnseite der Beilagscheibe 21 angeordnet sind. Entlang der Längsachse der Schraube 11 ist eine Innenöffnung 29 vorgesehen, um ein Werkzeug 39 zum Eindrehen der Schraube 11 rasch zentrieren zu können.

In dem zweiten Ausführungsbeispiel gemäss den Figuren 4 bis 7 ist die Schraube 11 zweiteilig ausgeführt, da die Beilagscheibe 21 einen separaten Bauteil darstellt. Den Figuren 5 und 7 ist die spezielle Ausgestaltung des Schraubenkopfs 17 zu entnehmen. Der Schraubenkopf 17 ist als eine Kugelschicht 33 ausgestaltet. Die Kugelschicht ist von zwei Kreisen 35a,b begrenzt, wobei der Kreis 35a mit dem kleineren Radius dem zweiten Ende des Gewindeschafts 13 zugewandt ist. Die Kugelschicht 33 ist in einer Durchgangsöffnung 37 der Beilagscheibe 21 aufgenommen, welche eine kugelschichtförmige Manteloberfläche aufweist. Die Abmessungen der Kugelschicht 33 und der Manteloberfläche sind derart aufeinander angepasst, dass diese kugelgelenkig zusammenwirken. Die Schraube 11 lässt sich demnach relativ zu der Beilagscheibe 21 verschwenken. Die Längsachse der Schraube kann daher auch schräg zu der Beilagscheibe orientiert sein und muss nicht zwangsläufig normal zu der Beilagscheibe orientiert sein. Beispielsweise können Unebenheiten oder eine schräge Oberfläche des Leichtbaustoffs durch diese kugelgelenkige Funktion kompensiert werden. Auch kann eine Schräg- bzw. Querstellung der Schraube 11 relativ zu der Beilagscheibe 21 bzw. dem Leichtbaustoff der Umgehung eines Hindernisses (zum Beispiel ein Stahlträger in dem Leichtbaustoff) oder der Erhöhung der Haltekraft der Schraube in dem Leichtbaustoff dienen. Benötigt die Innenöffnung 29 bzw. die zweite Schraube eine bestimmte Orientierung, so lässt sich diese mittels der kugelgelenkigen Funktion ebenfalls einstellen.

Die Schraube des ersten und zweiten Ausführungsbeispiels ist bevorzugt aus einem Kunststoff, insbesondere einem Polyamid, gefertigt und kann durch Spritzgiessen rasch und kostengünstig hergestellt werden.

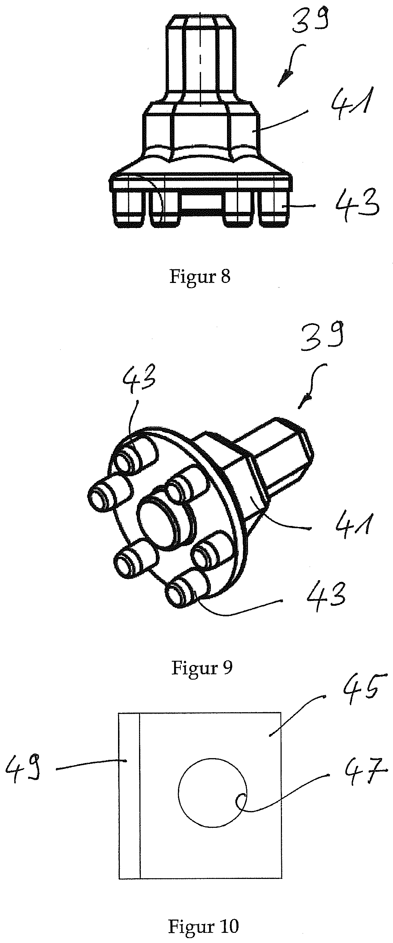

In den Figuren 8 und 9 ist ein Werkzeug 39 gezeigt, welches es ermöglicht, ein Drehmoment auf die Schraube 11 zu übertragen. Das Werkzeug umfasst einen Support 41. Mittels des Supports 41 kann das Werkzeug 41 an einem handelsüblichen Schraubendreher befestigt sein. Diesen können nicht abschliessend Bohrmaschinen, Akkubohrmaschinen, Druckluftschrauber oder manuelle Schraubenzieher sein. An dem Support sind konzentrisch angeordnete Stifte 43 angeordnet welche in den kreisrunden Vertiefungen 27 aufnehmbar sind.

Soll die Schraube 11 in besonders weichen Leichtbaustoffen, wie Styroporplatten halten, so ist es bevorzugt, ein Set aus Schraube 11 und einer Konterplatte 45 gemäss Figur 10 zu verwenden. Die Konterplatte 45 ist seitlich in den Leichbaustoff einzustecken. Deshalb kann die Schraube 11 zusammen mit der Konterplatte 45 nur am Rand einer Leichtbaustoffplatte verwendet werden, damit die Konterplatte 45 nicht zu weit in den Leichtbaustoff eingeschoben werden muss. Um die Konterplatte 45 in den Leichtbaustoff einschieben zu können, ohne dass dieser zuvor geschlitzt werden muss, ist an der Konterplatte 45 an wenigstens einer Seite eine Schneide 49 vorgesehen. Um das Einführen noch weiter zu erleichtern besitzt die Konterplatte 45 eine Dicke von 1 bis 3 mm und bevorzugt zwischen 1,5 und 2,5 mm. Die Konterplatte 45 kann aus Metall oder einem ausreichend belastbaren Kunststoff hergestellt sein.

Die Einschrauböffnung 47 ist an das Aussengewinde 15 der Schraube 11 angepasst, besitzt also einen Innendurchmesser, welcher grösser als der Durchmesser des Gewindeschafts 13 und kleiner als der Aussendurchmesser des Aussengewindes 15 ist. Die Schraube 11 lässt sich demnach in die Einschrauböffnung 47 einschrauben. Ist die Konterplatte 45 in einem Abstand zur Oberfläche in den Leichtbaustoff eingedrückt, so schraubt sich die Schraube nicht nur in den Leichbaustoff sondern auch durch die Konterplatte 45. Die Konterplatte 45 bildet einen noch weiter verbesserten Auszugsschutz zu der ohnedies in den meisten Leichbaustoffen gut haltenden Schraube 11. Ist der Leichtbaustoff besonders weich, so neigt die Schraube dazu, sich in dem Leichtbaustoff durchzudrehen und keinen Halt mehr zu besitzen. Ist die Schraube 11 zusätzlich in die Konterplatte 45 eingeschraubt, so ist ein Durchdrehen verhindert und die Schraube verliert erst dann Halt, wenn die Schraube 11 mitsamt der Konterplatte 45 aus dem Leichtbaustoff herausgerissen werden würde.

Ein Ausführungsbeispiel der erfindungsgemässen Schraube kann folgende Abmessungen haben:

| | |
|---|---|
| Länge der Schraube 11 | 140 mm |
| Grösster Aussendurchmesser des Gewindes | 80 mm |
| Grösster Innendurchmesser des Gewindes | 15 mm |
| Öffnungswinkel des Konus 13 | 20° |
| Gewindesteigung | 30 mm |
| Flankenwinkel des Gewindes | 25° |
| Durchmesser der Kugelschicht 33 | 40 mm |
| Durchmesser der Beilagscheibe 21 | 90 mm |
| Dicke der Beilagscheibe 21 | 10 mm |
| Durchmesser des Schraubenkopfs 17 bei separater Beilagscheibe 21 | 40mm |

Die erfindungsgemässe Schraube 11 weist eine integrale Beilagscheibe 21 auf. Diese Vorrichtungsmerkmale ermöglichen, dass die Schraube 11 sich zuverlässig in einen Leichtbaustoff schneidet und in diesem hält, ohne dass das Material im Bereich des Gewindes durch das Eindrehen der Schraube 11 geschwächt werden würde. Der grösste Aussendurchmessers des Aussengewindes 15 entspricht wenigstens 80% des Durchmessers der Beilagscheibe 21. Dadurch ergibt sich eine grosse Flankenhöhe 23 des Aussengewindes 15. Ein derart dimensioniertes Aussengewinde 15 setzt dem Leichtbaustoff, in dem es eingeschraubt ist, einen hohen Auszugswiderstand entgegen. Darüber hinaus bietet die grosse Flankenhöhe Platz dafür, dass eine Schraube zur Halterung von Gegenständen an dem Leichtbaustoff in das Aussengewinde 15 einschraubbar ist.

### Legende:

- 11: Schraube
- 13: Gewindeschaft
- 15: Aussengewinde
- 17: Schraubenkopf
- 19: Werkzeugansatz
- 21: Beilagscheibe
- 22: Spitze des Gewindeschafts
- 23: Flankenhöhe
- 24: Rohrschelle mit Schraube
- 25a,b: Gewindeflanken
- 26: Bohrloch
- 27: Kreisrunde Vertiefungen
- 28: Waffelstruktur
- 29: Innenöffnung
- 33: Kugelschicht
- 35: Kreise der Kugelschicht
- 37: Durchgangsöffnung
- 39: Werkzeug
- 41: Support
- 43: Stifte

## Patentansprüche

1. Schraube (11) zur Halterung von Gegenständen an einem Leichtbaustoff, insbesondere einem Dämmmaterial mit
- einem Gewindeschaft (13) mit einem ersten und zweiten Ende,
- einem Aussengewinde (15), welches sich spiralförmig entlang des Gewindeschafts (13) erstreckt,
- einer Spitze (22), welche am ersten Ende des Gewindeschafts (13) ausgebildet ist,
- einem Schraubenkopf (17), welcher an dem zweiten Ende des Gewindeschafts (13) angeordnet ist und als eine integrale Beilagscheibe (21) ausgebildet ist, welche das Einsinken des Schraubenkopfs (17) in den Leichtbaustoff verhindert, und
einem Werkzeugansatz (27) zur Übertragung eines Drehmoments von einem Werkzeug (41) auf die Schraube (11),
**dadurch gekennzeichnet,**
- **dass** die Beilagscheibe (21) einen Radius von wenigstens 35 mm und bevorzugt von wenigstens 45 mm aufweist und
- **dass** das Aussengewinde (15) eine Flankenhöhe (23) besitzt, welche Flankenhöhe (23) an jeder Stelle des Aussengewindes (15) grösser oder gleich dem halben Radius der Beilagscheibe (21) ist.

2. Schraube nach Anspruch 1, **dadurch gekennzeichnet, dass** das Aussengewinde (15) an jeder Stelle eine ausreichende Flankenhöhe (23) besitzt, damit eine Schraube (24) mit Orientierung im Wesentlichen parallel zum Gewindeschaft (13) in das Aussengewinde (15) eindrehbar ist und in der Schraube (11) gehalten werden kann.

3. Schraube nach einem der Ansprüche 1 bis 2, **dadurch gekennzeichnet, dass** die Beilagscheibe (21) an ihrer dem Aussengewinde (15) abgewandten Seite eine Waffelstruktur (28) aufweist.

4. Schraube nach einem der Ansprüche 1 bis 3, **dadurch gekennzeichnet, dass** die Flankenhöhe (23) am ersten Ende des Gewindeschafts (13) eine Flankenhöhe (23) von wenigstens 15 mm, bevorzugt von wenigstens 20 mm und besonders bevorzugt von wenigstens 25 mm aufweist.

5. Schraube nach einem der Ansprüche 1 bis 4, **dadurch gekennzeichnet, dass** die Flankenhöhe (23) vom ersten Ende zum zweiten Ende des Gewindeschafts (13) kontinuierlich zunimmt.

6. Schraube nach einem der Ansprüche 1 bis 5, **dadurch gekennzeichnet, Dass** die Flankenhöhe (23) am zweiten Ende des Gewindeschafts (13) wenigstens 80 % des Radius der Beilagscheibe beträgt.

7. Schraube nach einem der Ansprüche 1 bis 6, **dadurch gekennzeichnet, dass** der Gewindeschaft (13) die Gestalt eines Konus besitzt.

8. Schraube nach Anspruch 7, **dadurch gekennzeichnet, dass** der Konus als ein gerader Kreiskegel ausgebildet ist, dessen Spitze das erste Ende des Gewindeschafts (13) bildet und dessen Basiskreis das zweite Ende des Gewindeschafts (13) bildet.

9. Schraube nach einem der Ansprüche 7 bis 8, **dadurch gekennzeichnet, dass** der Konus einen Öffnungswinkel aufweist, welcher zwischen 10 und 2 Grad, bevorzugt zwischen 8 und 3 Grad und besonders bevorzugt zwischen 6 und 4 Grad liegt.

10. Schraube nach einem der Ansprüche 1 bis 9, **dadurch gekennzeichnet, dass** der Flankenwinkel des Aussengewindes (15) zwischen 35 und 15 Grad, bevorzugt zwischen 30 und 20 Grad und besonders bevorzugt zwischen 26 und 24 Grad beträgt.

11. Schraube nach einem der Ansprüche 1 bis 10, **dadurch gekennzeichnet, dass** die Steigung des Aussengewindes (15) zwischen 40 und 10 mm, bevorzugt zwischen 35 und 15 mm und besonders bevorzugt zwischen 30 und 20 mm liegt.

12. Set aus
- einer Schraube (11) nach den vorgehenden Ansprüchen,
- einer Konterplatte (45), welche seitlich in den Leichtbaustoff einschiebbar ist und an welcher wenigstens eine Einschrauböffnung (47) zum Einschrauben der Schraube (11) vorgesehen ist und
- einem Werkzeug (39), welches einen Support (41) zur Halterung an einem elektrischen oder manuellen Schraubendreher und eine Mehrzahl von konzentrisch an dem Support angeordneten Stiften (43) aufweist, wobei die Stifte zur Drehmomentübertragung in den Werkzeugansatz (27) des Schraubenkopfs (17) eingreifen können.

13. Set nach Anspruch 12, **dadurch gekennzeichnet, dass** die Konterplatte (45) an einer Seitenkante eine Schneide (49) aufweist.

14. Set nach Anspruch 12 oder 13, **dadurch gekennzeichnet, dass** in der Konterplatte (45) wenigstens eine Durchführung mit Innengewinde vorgesehen ist.

## Claims

1. Screw (11) for fixing objects to a light building material, in particular to a lightweight building material, in particular an insulating material, with
- a thread shaft (13) with a first and a second end,
- an outer thread (15) that extends spirally along the thread shaft (13),
- a tip (22) that is formed at the first end of the thread shaft (13),
- a screw head (17) that is placed at the second end of the thread shaft (13) and that is formed as an integral flat washer (21) that impedes the sinking-in of the screw head (17) into the lightweight building material and
a tool tip (27) for the transmission of a torque from a tool (41) to the screw (11),
**characterized in**
- **that** the flat washer (21) has a radius of at least 35 mm and preferably of at least 45 mm and
- **that** the outer thread (15) has a flank height (23), which flank height (23) is at every point of the outer thread (15) more than or equal to half the radius of the flat washer (21).

2. Screw according to claim 1, **characterized in that** the outer thread (15) has at every point a sufficient flank height (23) so that a screw (24) can be screwed into the outer thread (15) with an orientation substantially parallel to the thread shaft (13) and can be held in the screw (11).

3. Screw according to one of the claims 1 to 2, **characterized in that** the flat washer (21) has a wafer structure (28) at its side opposite the outer thread (15).

4. Screw according to one of the claims 1 to 3, **characterized in that** the flank height (23) has at the first end of the thread shaft (13) a flank height (23) of at least 15 mm, preferably of at least 20 mm and particularly preferably of at least 25 mm.

5. Screw according to one of the claims 1 to 4, **characterized in that** the flank height (23) continually increases from the first end to the second end of the thread shaft (13).

6. Screw according to one of the claims 1 to 5, **characterized in that** the flank height (23) is at the second end of the thread shaft (13) at least 80% of the radius of the flat washer.

7. Screw according to one of the claims 1 to 6, **characterized in that** the thread shaft (13) has the shape of a cone.

8. Screw according to claim 7, **characterized in that** the cone is formed as a straight circular cone, the tip of which forms the first end of the thread shaft (13) and the base circle of which forms the second end of the thread shaft (13).

9. Screw according to one of the claims 7 to 8, **characterized in that** the cone has an opening angle that lies between 10 and 2 degrees, preferably between 8 and 3 degrees and particularly preferably between 6 and 4 degrees.

10. Screw according to one of the claims 1 to 9, **characterized in that** the flank angle of the outer thread (15) is between 35 and 15 degrees, preferably between 30 and 20 degrees and particularly preferably between 26 and 24 degrees.

11. Screw according to one of the claims 1 to 10, **characterized in that** the pitch of the outer thread (15) lies between 40 and 10 mm, preferably between 35 and 15 mm and particularly preferably between 30 and 20 mm.

12. Set of
- a screw (11) according to the preceding claims,
- a counter plate (45) that can be slidingly inserted laterally into the lightweight building material and on which at least one screw-in opening (47) is provided for screwing-in the screw (11) and
- a tool (39) that has a support (41) for fixing to an electric or a manual screwdriver and a multitude of pins (43) placed concentrically on the support, whereby the pins can engage into the tool tip (27) of the screw head (17) for transmitting the torque.

13. Set according to claim 12, **characterized in that** the counter plate (45) has a blade (49) on a side edge.

14. Set according to claim 12 or 13, **characterized in that** at least one passage with an inner thread is provided in the counter plate (45).

## Revendications

1. Vis (11) pour la fixation d'objets sur un matériau de construction léger, en particulier un matériau isolant, avec
- une tige filetée (13) avec une première et une seconde extrémité,
- un filet extérieur (15) qui s'étend en forme de spirale le long de la tige filetée (13),
- une pointe (22) qui est formée à la première extrémité de la tige filetée (13),
- une tête de vis (17) qui est placée à la seconde extrémité de la tige filetée (13) et qui est formée comme une rondelle plate intégrée (21) qui empêche l'enfoncement de la tête de vis (17) dans le matériau de construction léger et un embout d'outil (27) pour la transmission d'un couple d'un outil (41) à la vis (11),
**caractérisée en ce**
- **que** la rondelle plate (21) présente un rayon d'au moins 35 mm et de préférence d'au moins 45 mm et
- **que** le filet extérieur (15) possède une hauteur de flanc (23), laquelle hauteur de flanc (23) est supérieure ou égale au demi rayon de la rondelle plate (21) à chaque endroit du filet extérieur (15).

2. Vis selon la revendication 1, **caractérisée en ce que** le filet extérieur (15) possède à chaque endroit une hauteur de flanc suffisante (23) pour qu'une vis (24) puisse être introduite par rotation dans le filet extérieur (15) avec une orientation sensiblement parallèle à la tige filetée (13) et puisse être maintenue dans la vis (11).

3. Vis selon l'une des revendications 1 à 2, **caractérisée en ce que** la rondelle plate (21) présente, sur son côté opposé au filet extérieur (15), une structure gaufrée (28).

4. Vis selon l'une des revendications 1 à 3, **caractérisée en ce que** la hauteur de flanc (23) a, à la première extrémité de la tige filetée (13), une hauteur de flanc (23) d'au moins 15 mm, de préférence d'au moins 20 mm et de manière particulièrement préférée d'au moins 25 mm.

5. Vis selon l'une des revendications 1 à 4, **caractérisée en ce que** la hauteur de flanc (23) augmente continuellement de la première extrémité à la seconde extrémité de la tige filetée (13).

6. Vis selon l'une des revendications 1 à 5, **caractérisée en ce que** la hauteur de flanc (23) à la seconde extrémité de la tige filetée (13) est d'au moins 80% du rayon de la rondelle plate.

7. Vis selon l'une des revendications 1 à 6, **caractérisée en ce que** la tige filetée (13) possède la configuration d'un cône.

8. Vis selon la revendication 7, **caractérisée en ce que** le cône est configuré comme un cône à base circulaire droite dont la pointe forme la première extrémité de la tige filetée (13) et dont le cercle de la base forme la seconde extrémité de la tige filetée (13).

9. Vis selon l'une des revendications 7 à 8, **caractérisée en ce que** le cône présente un angle d'ouverture qui se situe entre 10 et 12 degrés, de préférence entre 8 et 3 degrés et de manière particulièrement préférée entre 6 et 4 degrés.

10. Vis selon l'une des revendications 1 à 9, **caractérisée en ce que** l'angle de franc du filet extérieur (15) est entre 35 et 15 degrés, de préférence entre 30 et 20 degrés et de manière particulièrement préférée entre 26 et 24 degrés.

11. Vis selon l'une des revendications 1 à 10, **caractérisée en ce que** le pas du filet extérieur (15) se situe entre 40 et 10 mm, de préférence entre 35 et 15 mm et de manière particulièrement préférée entre 30 et 20 mm.

12. Ensemble composé
- d'une vis (11) selon les revendications précédentes,
- d'une contre-plaque (45) qui peut être insérée par glissement latéralement dans le matériau de construction léger et sur laquelle au moins une ouverture de vissage (47) est prévue pour visser la vis (11) et
- d'un outil (39) qui présente un support (41) pour la fixation sur un tournevis électrique ou manuel et une multitude de broches (43) placées de manière concentrique sur le support, cependant que les broches peuvent s'engrener dans l'embout d'outil (27) de la tête de vis (17) pour la transmission du couple.

13. Ensemble selon la revendication 12, **caractérisé en ce que** la contre-plaque (45) présente un tranchant (49) sur un bord de côté.

14. Ensemble selon la revendication 12 ou 13, **caractérisé en ce qu'**il est prévu au moins dans la contre-plaque (45) un passage avec fun filet intérieur.
